# NEUE EUROPÄISCHE PATENTSCHRIFT

(11) **EP 0 279 866 B2**
(45) Veröffentlichungstag und Bekanntmachung des Hinweises auf die Entscheidung über den Einspruch: **17.07.1996**
(45) Hinweis auf die Patenterteilung: 11.03.1992
(21) Anmeldenummer: 86117911.7
(22) Anmeldetag: 22.12.1986
(51) Int. Cl.: B23K 26/00

(54) **Verfahren zum Herstellen eines Formkörpers aus Blechteilen unterschiedlicher Dicke**
Manufacturing method for a shaped body of sheet metal pieces with different thicknesses
Procédé de fabrication d'un corps de façonnage de pièces en tôle d'épaisseurs différentes

(43) Veröffentlichungstag der Anmeldung: 31.08.1988
(73) Patentinhaber: Thyssen Stahl Aktiengesellschaft, D-47161 Duisburg (DE)
(72) Erfinder: Frings Adam Dipl.Ing., D-4300 Essen (DE); Prange Wilfried Dipl. Ing., D-4220 Dinslaken (DE)
(74) Vertreter: Cohausz & Florack Patentanwälte

(56) Entgegenhaltungen:
- EP-A- 0 177 945
- EP-A- 0 189 806
- CH-A- 593 757
- DE-A- 1 116 034
- DE-A- 1 515 197
- DE-A- 3 121 555
- DE-A- 3 502 368
- JP-A-50 113 445
- JP-A-59 220 229
- JP-U-58 111 120
- JP-U-59 182 424
- US-A- 4 000 392
- US-A- 4 377 735
- US-A- 4 650 954
- LASER WELDING, MACHINING AND MATERIALS PROCESSING; PROCEEDINGS OF THE INTERNATIONAL CONFERENCE ON APPLICATIONS OF LASERS AND ELECTRO-OPTICS ICALEO '85, Seiten 65-72, Springer-Verlag, Berlin, DE; A. SHINMI et al.: "Laser welding and its applications for steel making process"
- K. YASUDA "Deep drawing of Welded Blanks", Transactions of the Japan Welding Society, Band 11, Nr. 2, Oct. 1980, Seiten 136 - 142
- THYSSEN TECHNISCHE BERICHTE, Band 18, Heft 2, 1986, J. ALBRECHT et al, "Laserstrahlenschweissen von Thyssen-Flachprodukten und grossformatigen feuerverzinkten Feinblechen", Seiten 191 - 199
- Prospektblatt der Firma Nothelfer GmbH: "Neue Möglichkeiten durch die Laser-Technologie"
- A. SHINMI et al "Laser welding and its application for steel making process", "Laser welding, Machining and Materials Processing", 1985, IFS (Publications) Ltd UK Springer Verlag, Seiten 65 - 72
- WELDING JOURNAL, Band 52, Nr. 4, April 1973, E. L. BAARDSEN et al "High Speed Welding of Sheet Steel with a CO2 Laser", Seiten 227 - 229
- "Metals Handbook", 8. Auflage, 1969, American Society for Metals, Ohio, Seiten 31 - 42
- J. RUGE "Handbuch der Schweisstechnik", Band III "Konstruktive Gestaltung der Bauteile", 1985, Springer-Verlag, Seiten 96 - 102
- DVS Berichte "Schweissen und Schneiden '80", Band 65, G. SEPOLD, "Elektronen- und Laserstrahlschweissen - Stand der Technik und Entwicklungen", 1980, DVS, Düsseldorf, Seiten 35 - 41
- SCHWEISSEN UND SCHNEIDEN, Band 36, Heft 9, Sept. 1984, Düsseldorf, A. NENTWIG et al "Schweissen mit Kohlendioxid- und Neodym YAG-Lasern", Seiten 431 - 434
- Zusammenfassung von MM, Maschinenmarkt 91, Nr. 20, 1985, "Schweissen mit Laserstrahlen in der Serienfertigung erfordert gute Steuerungen", Seiten 338 - 340
- L.I.A., Band 38, ICALEO, 1983, C. DAWES et al "CO2 Laser Welding of Deep Drawing Steel Sheet and Microalloyed Steel Plate", Seiten 73 -79
- Merkblatt DVS 2704 (October 1976), Deutscher Verband für Schweisstechnik
- THE WELDING INSTITUTE - RESEARCH REPORT, Jan. 1983, Cambridge, C. DAWES et al "Laser welding of T joints in low carbon steel sheets - process tolerance data"
- THE WELDING INSTITUTE - RESEARCH BULLETIN, Aug. 1983, C. DAWES "CO2 laser welding low carbon steel sheet", Seiten 260 - 265
- J. RUGE "Handbuch der Schweisstechnik", Band III "Konstruktive Gestaltung der Bauteile", 1985, Springer-Verlag, Seiten 6, 7; 48, 53; 50, 51; 95, 96
- INDUSTRIE - ? -, Nr. 86, 28.10.1986, T. HERRMANN et al "Laserschweissen verzinkter Karosseriebleche", Seiten 81 - 82
- A. PHILLIPS et al "The Welding Handbook", 6. Auflage, 1969, American Welding Society, Band 2, Kapitel 24, Seiten 26 - 33
- DIN 32511 "Elektronen- und Laserstrahlverfahren zur Materialbearbeitung, Begriffe für Verfahren und Geräte", Entwurf Dez. 1992 (mit Änderungen gegenüber der Ausgabe Aug. 1987)
- SCHWARTZ, M.M., "Metals Joining Manual", 1979, McGraw-Hill USA, page 2-35 - 2-37

## Beschreibung

Die Erfindung bezieht sich auf ein Verfahren zum Herstellen von durch Pressen oder Tiefziehen geformter Formkörper aus zusammengeschweißten, insbesondere mindestens einseitig mit einem metallischen Korrosionsschutz, z.B. aus Zink, versehenen Blechteilen unterschiedlicher Dicke.

Formkörper aus Blech sind in der Regel in einzelnen Bereichen unterschiedlich stark belastet. Beispiele für derart unterschiedlich stark belastete Formkörper sind Karosserieteile von Kraftfahrzeugen, insbesondere die Bodenplatte. Werden solche Bauteile nach der maximalen Belastung dimensioniert, führt das nicht nur zu einer Materialvergeudung, sondern auch und vor allem zu einem unnötig hohen Gewicht der Formkörper. Diese Nachteile können vermieden werden, wenn die Formkörper entsprechend ihrer Belastung in den einzelnen Bereichen unterschiedlich dimensioniert werden.

So ist es bekannt, die Formkörper aus mehreren einzeln geformten Blechteilen unterschiedlicher Dicke zusammenzusetzen. Die einzelnen Teile überlappen an ihren Rändern einander und sind durch Widerstandsschweißen oder Schmelzschweißen miteinander verschweißt.

Bei einem solchen Formkörper stehen den Vorteilen der Materialeinsparung und des geringeren Gewichtes die Nachteile gegenüber, daß der Herstellungsaufwand erheblich ist. Es werden eine Vielzahl von Einzelwerkzeugen für die Verformung der einzelnen Blechteile benötigt. Die eigentlich nicht für die Stabilität benötigte doppelte Materialstärke im Überlappungsbereich der Ränder muß in Kauf genommen werden, um ohne große Justierarbeiten der möglicherweise auch in den Randbereichen geformten Blechteile diese miteinander verbinden zu können. Bei oberflächengeschützten Blechteilen bleiben die Schnittkanten offen und durch die Schweißverbindung, insbesondere bei Schmelzschweißverfahren, wird der Oberflächenschutz zerstört. Schließlich ergeben sich bei Anwendung des Schmelzschweißverfahrens verhältnismäßig große Zonen, die in ihrer Struktur und Festigkeit von den übrigen, nicht von der Schweißung beeinflußten Zonen unterschiedlich sind. Da beim Punktverschweißen einander überlappender Randbereiche die Bereiche zwischen den Schweißstellen offen sind, ist in der Regel eine zusätzliche Abdichtung erforderlich.

Diese Schwierigkeiten sind zum Teil mit einem bekannten Verfahren (JP-Offenlegungsschrift des Gebrauchsmusters SHO-58-76931, Veröffentlichungsnummer SHO 59-182 424) gelöst. Bei diesem Verfahren werden ebene Blechteile unterschiedlicher Dicke durch Stumpfschweißen mittels eines Laserstrahls miteinander verbunden und anschließend als Einheit zu dem gewünschten Formkörper umgeformt. Wie die Schweißnaht im einzelnen hergestellt werden soll, ist im Stand der Technik allerdings nicht beschrieben.

Der Erfindung liegt die Aufgabe zugrunde, ein Verfahren zum Herstellen von Formkörpern zu schaffen, die unter Beibehaltung einer material- und gewichtssparenden Bauweise nicht nur einfacher, sondern auch unter möglichst geringem Qualitätsverlust gegenüber dem Ausgangsmaterial herzustellen sind.

Diese Aufgabe wird durch die Merkmale des Anspruchs 1 gelöst.

Beim erfindungsgemäßen Verfahren ist im Vergleich zu dem bekannten Verfahren der Herstellungsaufwand aus mehreren Gründen kleiner. Da die Blechteile beim Verschweißen noch nicht geformt sind, lassen sie sich ohne größere Positionierarbeiten miteinander verschweißen. Die Formgebung erfolgt in einer Stufe an der zusammengeschweißten Einheit und nicht mehr separat für jedes Blechteil. Aufgrund der an sich bekannten stumpfen Verschweißung mittels Laserstrahl (DE-A-35 023 68) läßt sich der Schweißbereich klein halten und exakt einstellen, so daß durch die Schweißnaht nur vernachlässigbare kleine Bereiche der gesamten Einheit in der Materialstruktur und Festigkeit gegenüber den übrigen Bereichen verändert werden. Da beim Laserstrahlschweißen Beschichtungen wie Zink im Schweißbereich verdampfen und nicht in die Schmelze gelangen, tritt außerdem keine wesentliche Veränderung in der Materialstruktur der Schweißnaht ein, jedenfalls bleibt das Material auch im Bereich der Schweißnaht verformungsfähig. Wegen der geringen Ausdehnung der ohne Zusatzmaterial erstellten Schweißnaht "opfert" sich das der Schweißnaht benachbarte Material beim Verformungsvorgang dann, wenn das Material der Schweißnaht allein die Verformung nicht mitmachen kann. Schließlich ergibt sich aufgrund der geringen Ausdehnung der mit Laserstrahl geschweißten Schweißnaht der Effekt der Fernschutzwirkung, d.h., daß auch im Bereich der Schweißnäht die selbst nicht, z.B. durch eine Zinkschicht, korrosionsgeschützt ist, durch die benachbarte Korrosionsschutzschicht mit geschützt ist. Um möglichst schmale Schweißnähte ohne Zusatz von Fülimaterial mitttels Laserstrahl schweißen zu können, sollte die Welligkeit der aneinanderstoßenden Schnittkanten in der Blechebene nicht größer als 0,04 mm sein und der Brennfleck des Laserstrahls nicht größer als 0,2 mm sein. Da die Blechteile von der Seite aus geschweißt werden, auf der die Oberflächen der Blechteile gegeneinander versetzt sind, ergibt sich ein Übergang von den Oberflächen der beiden Blechteile in Form einer Hohlkehle. Durch die Positionierung des Brennfleckes des Laserstrahls und dessen Strahlrichtung läßt sich der Anteil des aufzuschmelzenden Materials in beiden Blechteilen und damit auch die Bildung der Schweißnaht beeinflussen, und zwar da durch das die Führung des Laserstrahls das dickere Blechteil den größeren Anteil an der Schweißzone erhält, indem mit schräg zur Oberfläche der Blechteile gerichtetem Laserstrahl geschweißt wird, wobei eine Komponente der Strahlrichtung gegen die freiliegende Schnittkante des überstehenden Blechteils gerichtet ist.

Zur Vermeidung einer wegen Reflexion des Laserstrahls undefinierten Energieeinstrahlung in das Material sollte der Laserstrahl von dem Übergangsbereich der freiliegenden Schnittkante und der Oberfläche des dickeren Blechteils ferngehalten werden. Ein Wurzeldurchhang oder Wurzelrückfall der Schweißnaht auf der Rückseite der Schweißseite läßt sich auf einfache Art und Weise vermeiden, wenn die Blechteile im Schweißbereich zumindest während der schmelzflüssigen Phase mit einem Gaspolster, insbesondere aus Inertgas, beaufschlagt werden.

Im folgenden wird die Erfindung anhand einer Zeichnung näher erläutert; die im Querschnitt Ausschnitte aus dem Schweißnahtbereich von unterschiedlich dicken Blechteilen zeigt.

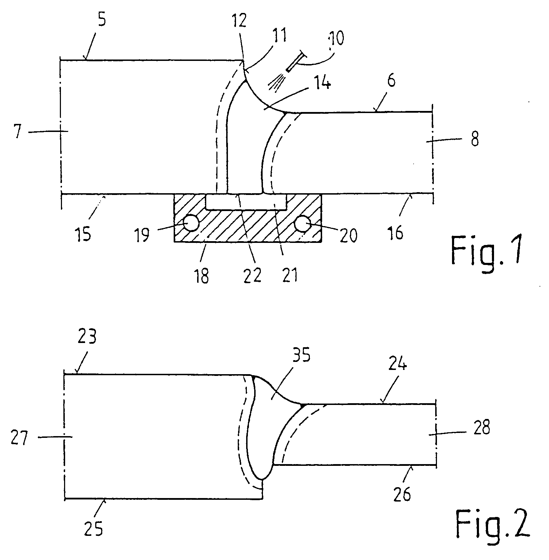

Beim Ausführungsbeispiel der Fig. 1 sind die auf der Schweißseite liegenden Oberflächen 5.6 der beiden Blechteile 7,8 gegeneinander versetzt.

Der schräg zu den Oberflächen 5,6 gerichtete Laserstrahl 10 hat eine gegen die freiliegende Schnittkante 11 des dickeren Blechteils 7 gerichtete Strahlrichtungskomponente, wobei aber die obere Ecke 12 vom Laserstrahl 10 nicht beaufschlagt wird. Im Vergleich mit einer Schweißnäht ohne Versetzung der Oberflächen der Blechteile auf der Schweißseite ist hinsichtlich ihrer Gestalt und Ausdehnung die Schweißnaht 14 des Ausführungsbeispiels der Fig. 1 günstiger , weil hier die Gefahr geringer ist. daß insbesondere im Wurzelbereich der Schweißnat Kerbrisse auftreten.

Um einen Wurzeldurchhang oder Wurzelrückfall an der Unterseite der Schweißnaht 14 zu verhindern, kann die Schweißnaht 14 an dieser Stelle auf einem Gaspolster abgestützt sein. Beim Ausführungsbeispiel der Fig. 1 ist zu diesem Zweck an den Unterseiten 15,16 der beiden Blechteile 7,8 ein einen Kanal 21 aufweisender Kühlkörper 18 angesetzt. Der Kühlkörper 18 wird gekühlt durch Kanäle 19,20 durchströmendes Kühlmittel. Der Kanal 21 liegt im Bereich der Schweißnaht 14 und ist mit unter Überdruck stehendem Inertgas gefüllt Das unter Überdruck stehende Inertgas verhindert, daß es an der Unterseite 22 der Schweißnaht 14 zu einem Wurzeldurchhang kommt. Es versteht sich, daß die Abstützung der Schweißnaht auf der Rückseite der Schweißseite auch beim Ausführungsbeispiel der Fig. 1 mit einem entsprechend angepaßten Kühlkörper möglich ist.

Das Ausführungsbeispiel der Figur 2 unterscheidet sich von dem der Figur 1 darin, daß die Oberflächen 23-26,29-32 beider Blechteile 27,28,33,34 gegeneinander versetzt sind.

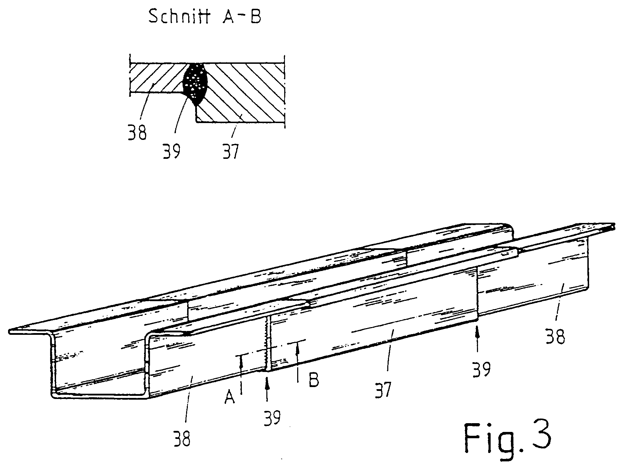

Fig. 3 zeigt einen Ausschnitt aus einem tiefgezogenen Formteil im Querschnitt, das aus unterschiedlich dicken Blechteilen 37,38 zusammengeschweißt ist und bei dem die Schweißnaht 39 in einem durch Tiefziehen verformten Abschnitt liegt.

## Patentansprüche

1. Verfahren zum Herstellen eines Formkörpers, der in einzelnen Bereichen entsprechend seiner Belastung unterschiedlich dimensioniert ist und insbesondere mindestens einseitig mit einem metallischen Korrosionsschutz, zum Beispiel aus Zink, versehen ist, bei dem ebene Blechteile unterschiedlicher Dicke entsprechend der späteren Belastung des Formkörpers zu einer Einheit von einer Seite aus mit einem Laserstrahl stumpf zusammengeschweißt werden, und die aus den zusammengeschweißten ebenen Blechteilen bestehende Einheit zum Formkörper durch Tiefziehen oder Pressen umgeformt wird, **dadurch gekennzeichnet**, daß die Oberflächen der Blechteile, die auf der Seite liegen, von der aus geschweißt wird, gegeneinander versetzt sind und daß mit schräg zur Oberfläche der Blechteile gerichtetem Laserstrahl geschweißt wird, wobei eine Komponente der Strahlrichtung gegen die freiliegende Schnittkante des dickeren Blechteils gerichtet ist, so daß durch diese Führung des Laserstrahls das dickere Blechteil den größeren Anteil der Schweißzone erhält.

2. Verfahren nach Anspruch 1, **dadurch gekennzeichne**t, daß der Laserstrahl von dem Übergangsbereich der freiliegenden Schnittkante und der Oberfläche des dickeren Blechteiles ferngehalten wird.

3. Verfahren nach Anspruch 1 oder 2 **dadurch gekennzeichnet**, daß die Blechteile im Schweißnahtbereich zumindest während der schmelzflüssigen Phase rückseitig mit einem Gaspolster, insbesondere aus Inertgas, beaufschlagt werden.

4. Verfahren nach einem der Ansprüche 1 bis 3, **dadurch gekennzeichnet**, daß das Zusammenschweißen ohne Zusatz von Füllmaterial erfolgt.

## Claims

1. A process for producing a shaped member being differently dimensioned in several areas according to the load, more particularly having a metallic anti-corrosion protection, for example, of zinc on at least one side, wherein flat pieces of sheet metal of different thicknesses according to the later load of the shaped member, are butt welded with a laser beam from one side to a unit and the unit composed of the welded flat sheet pieces are shaped by pressing or deep drawing to the shaped member,
characterized in that the surfaces of the pieces of sheet metal, lying on that side from where they are welded, are offset in relation to one another, and that welding is performed with the welding beam directed at an inclination to the surfaces of the pieces of sheet metal, one component of the beam direction being directed towards the exposed cut edge of the thicker piece of sheet metal, so that the laser beam is so guided that the thicker piece of sheet metal contains the larger proportion of the welding zone.

2. A process according to claim 1,
characterized in that the laser beam is kept away from the transitional zone between the exposed cut edge and the surface of the thicker piece of sheet metal.

3. A process according to claim 1 or 2,
characterized in that a gas cushion, more particularly of inert gas, acts on the rear side of the pieces of sheet metal in the welding joint zone at least during the molten liquid phase.

4. A process according to one of claims 1 to 3,
characterized in that the welding is carried out without filling material.

## Revendications

1. Procédé pour la fabrication d'un corps de forme qui est dimensionné de manière différente dans des régions individuelles en fonction de sa charge et est muni sur au moins une face d'une protection métallique contre la corrosion, par exemple en zinc, lequel des pièces planes en tôle d'épaisseurs différentes sont soudées bord à bord à partir d'une face en une unité avec un faisceau laser en fonction de la charge ultérieure du corps de forme, et l'unité constituée des pièces planes en tôle soudées ensemble est déformée par emboutissage profond ou emboutissage,
caractérisé en ce que les surfaces des pièces en tole, qui se trouvent sur cette face, à partir de laquelle elles sont soudées, sont décalées l'une par rapport à l'autre et on soude avec un faisceau laser dirigé obliquement par rapport à la surface des pièces en tôle, une composante de la direction du faisceau ètant dirigée contre l'arête libre de coupe de la pièce en tôle plus èpaisse, de facon que la pièce en tôle plus épaisse reçoit la plus grande partie de la zone de soudage par le guidage du faisceau laser.

2. Procédé selon la revendication 1,
caractérisé en ce que le faisceau laser est maintenu écarté de la zone de transition entre l'arête libre de coupe et la surface de la pièce en tôle plus épaisse.

3. Procédé selon l'une des revendications 1 ou 2,
caractérisé en ce que les pièces en tôle sont frappées sur la face arrière dans la région du cordon de soudure, pendant la phase de fusion, par un coussin de gaz, en particulier en gaz inerte.

4. Procédé selon l'une des revendications 1 à 3,
caractérisé en ce que le soudage est effectué sans apport de matière de remplissage.
